# EUROPEAN PATENT SPECIFICATION

(11) **EP 3 177 099 B1**
(45) Date of publication and mention of the grant of the patent: **30.08.2023**
(21) Application number: 16201889.9
(22) Date of filing: 02.12.2016
(51) Int. Cl.: H04W 40/00, H04W 92/24, H04W 88/14, H04W 76/12, H04W 88/16, H04W 8/08, H04L 45/00

(54) **A NETWORK ELEMENT SYSTEM**
NETZWERKELEMENTSYSTEM
SYSTÈME D'ÉLÉMENT DE RÉSEAU

(30) Priority: 04.12.2015 US 201514959422
(43) Date of publication of application: 07.06.2017
(73) Proprietor: University of Surrey, Guildford, Surrey GU2 7XH (GB)
(72) Inventor: DOLBY, Riki Benjamin, Hook, Hampshire RG27 9SG (GB); FOSTER, Gerry, Guildford, Surrey GU2 7XH (GB)
(74) Representative: Jaeger, Michael David

(56) References cited:
- EP-A1- 2 942 992
- WO-A1-2014/209007
- WO-A1-2015/000516
- US-A1- 2015 055 461
- US-A1- 2015 063 346
- US-A1- 2015 117 408
- "3rd Generation Partnership Project; Technical Specification Group Services and System Aspects; Study on control and user plane separation of EPC nodes (Release 14)", 3GPP DRAFT; 23714-020_CLEAN, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 30 November 2015 (2015-11-30), XP051071810, Retrieved from the Internet: URL:http://www.3gpp.org/ftp/tsg_sa/WG2_Arc h/Latest_SA2_Specs/Latest_draft_S2_Specs/ [retrieved on 2015-11-30]

## Description

### Technical Field

The present application relates to a control network entity for an LTE network and a network element system for use in for an LTE network.

### Background to the Invention

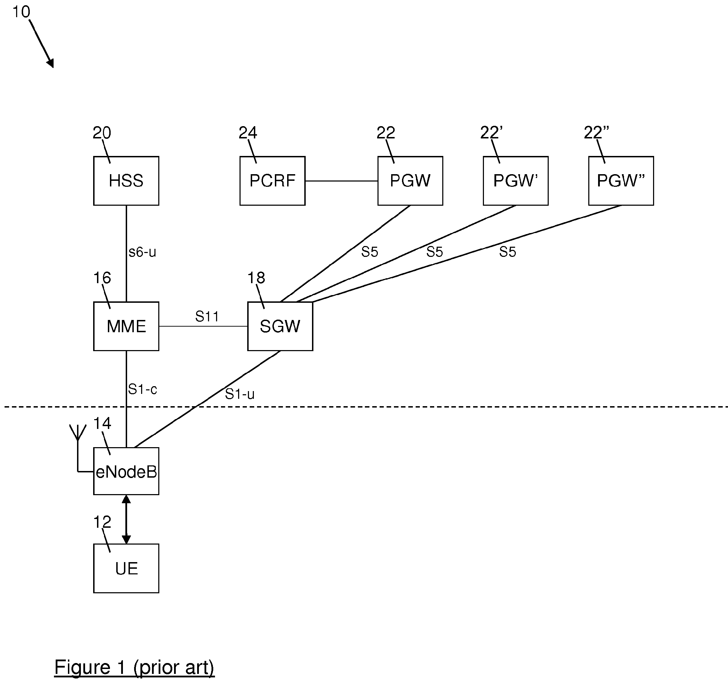

In a conventional mobile telecommunications architecture of the kind illustrated generally at 10 in Figure 1, a mobile user equipment (or UE) 12 such as a mobile telephone communicates with an evolved base station such as an evolved Node B (or eNodeB) 14 in the case of LTE. The eNodeB 14 connects to a core mobile telecommunications network to permit the UE 12 to communicate with the core network. The dashed horizontal line in Figure 1 represents the boundary of the core network in the illustrated architecture; elements of the core network are shown above the dashed horizontal line, whilst elements that are outside of the core network are shown below the dashed horizontal line.

The UE 12 connects to an eNodeB 14 to establish a radio connection to the mobile network. The UE 12 may then attach to a mobility management entity (MME) 16 connected to the eNodeB 14 in order to set up a network association between the UE 12 and the mobile network. Once a network attach is established to the MME 16, then the UE 12 may request data service to the MME 16, which directs a serving gateway (SGW) 18 of the core network to provide a data session. The SGW 18 in turn connects to one or more Packet Data Network (PDN) gateways (PGWs) 22, 22', 22", which each provide data connectivity for the UE 12 to external Packet Data Networks (PDNs) such as the Internet.

The MME 16 is responsible for selecting a SGW for the UE 12 data session request when the UE 12 initially attaches to the network, and for managing handovers between eNodeBs as the UE 12 moves. Additionally, the MME 16 communicates with a home subscriber server (HSS) 20 in order to authenticate a user attempting to connect to the network. The MME 16 is also involved in setting up and tearing down Internet Protocol (IP) transport tunnels (known as bearers) between the eNodeB 14 and the PGWs 22, 22', 22" and is responsible for paging the UE 12 when the UE 12 is in its idle state.

The SGW 18 is responsible for routing and forwarding user data packets between the UE 12 and the one or more PGWs 22, 22', 22". When the UE 12 is in its idle state the SGW 18 is the last active element in the downlink data path, and so triggers paging of the UE 12 by the MME 16 when downlink data intended for the UE 12 arrives at the SGW 18.

Each PGW 22, 22', 22" communicates with a Policy Rules and Charging Function (PRCF) 24, which is responsible for implementing policy rules and charging in the network. The PGW is in charge of allocating a user IP address to the UE 12. The SGW 18 and the PGWs 22, 22', 22" operate network IP addresses that identify themselves.

Data packets are routed between the UE 12 and the relevant one of the PGWs 22, 22', 22" (via the SGW 18) through IP transport tunnels set up between the UE 12 and the relevant PGW 22, 22', 22". These IP transport tunnels carry the user's traffic (data packets) by tunnelling their allocated user IP addressed packets through the tunnel, using the GPRS tunnelling protocol (GTP) between the network address of the respective eNodeB 14, SGW 18 and PGW 22, 22', 22" associated with the UE 12's data session.

Once the UE 12 is attached to the core network via the eNodeB 14, the MME 16 asks the SGW 18 to set up a GTP tunnel towards the external PDN to which the UE 12 is requesting access, via the relevant PGW 22, 22', 22". This initial connection between the UE 12 and the PDN is known as a default bearer, and has a "best effort" quality of service. (QoS).

In order to do this, the SGW 18 sends control messages to the relevant PGW 22, 22', 22", these control messages including the network IP address of the SGW 18. The relevant PGW 22, 22', 22" responds with the network IP address of the PGW to use for this bearer or connection.

Once this has been done, the SGW 18 confirms to the MME 16 that the GTP tunnel has been set up, and the MME 16 sets up an initial context for the UE 12 at the eNodeB 14, which includes the address of the SGW 18. The default bearers are subsequently modified to include any dedicated bearers (additional connections having specific QoS properties) that may be required by the user, e.g. for carrying voice or video data. Once this has been done the SGW 18 confirms to the MME 16, and bearer resources are established. In this way, data traffic can be routed from the UE 12 to the correct one of the PGWs 22, 22', 22" via the SGW 18.

The UE 12 may be connected simultaneously to more than one PGW 22, 22', 22" (as shown in Figure 1), in order to access more than one PDN. Each PGW 22, 22', 22" may be associated with one or more access point names (APN), each APN relating to a different PDN. For example, PGW 22 may be associated with an APN relating to the public Internet, PGW 22' may be associated with an APN relating to an enterprise local area network (LAN), and PGW 22" may be associated with an APN relating to an enterprise Internet Protocol (IP) telephony network. Alternatively, a PGW may provide service to multiple APNs at a time.

As indicated above, each different PGW is associated with at least one different APN. The UE 12 is allocated a different user IP address for each of the different APNs to which it requires access via one or more PGW to which it has been directed by the MME 16 at session set up time. Thus, in the example discussed above and illustrated in Figure 1, the UE 12 is allocated a different user IP address for the each of the public Internet, the enterprise LAN and the enterprise IP telephony network.

As the UE 12 moves, handovers between eNodeBs occur. The transport tunnels set up to carry user traffic may be switched between different SGWs 18 and/or eNodeBs 14 following these handovers in some instances (whereas in larger networks the UE 12 is more usually anchored at one SGW 18), but the user IP addresses allocated to the UE 12 for each different APN are maintained.

As will be appreciated, the more transport tunnels there are in a telecommunications network, the more tunnel overheads add to the latency of the user traffic in terms of packet encapsulation and de-encapsulation and address mapping. There are also additional overheads involved in managing multiple user IP addresses for the same user at the same endpoint. Latency is a particular concern in mobile radio environments where the radio path (between the UE 12 and the eNodeB14) part of the end to end logical connection supporting a data session between the UE 12 and the PGW 22 is not stable.

In order to reduce latency, mobile communications designers have added breakout points to networks to bypass some of the mobile network control elements (such as the SGW 18 and/or PGW 22) that manage the transport tunnels and bring the user traffic closer to the Internet. However, adding these breakout points gives rise to other issues, such as removal of administrative support for lawful intercept (LI) and billing, and can overcomplicate essential mobility procedures.

In GPRS (General Packet Radio Service) and UMTS (Universal Mobile Telecommunications System), "direct tunnelling" or "one tunnel" methods allow successive collapse of some of the transport tunnels along the path from the radio access network (RAN) to an external PDN, which helps to reduce latency in that path, but these methods do not allow the network operator to bring the user's traffic closer to the RAN or to use local breakouts to reduce latency further.

3GPP also introduced the Selective IP Traffic Offload SIPTO method (under 3GPP specification nos. TR23.859 and TR23.829), which allows traffic breakout for some traffic types (particularly low quality, low quality of service traffic), but this method does not natively support LI, which is a typically a legal requirement that must be fulfilled by operators as a condition of their spectrum licence.

Thus, a need exists for a way to reduce latency in a telecommunications network whilst supporting LI, operating only a single user IP address per user on the mobile network and supporting network mobility management procedures.

WO-A1- 2015/000516 describes a method, apparatus and computer program product for enabling PMM/ECM IDLE buffering within software defined network architecture.

US-A1-2015/117408 describes a gateway arrangements for wireless communication networks.

"3rd Generation Partnership Project; Technical Specification Group Services and System Aspects; Study on control and user plane separation of EPC nodes (Release 14)", (20151130), 3GPP DRAFT; 23714-020_CLEAN, 3RD GENERATION PARTNERSHIP PROJECT (3GPP) describes a potential architecture enhancements for the separation of user plane functionality form control plane functionality in various network components.

US-A1- 2015/063346 describes an Evolved Packet Core network comprising a converged media packet gateway control element including a GTP-C function of SGW, PGW, and P-CSCF and ATCF functions.

WO-A1- 2014/209007 describes a network structure for effectively applying a software-defined networking (SDN) technology to an LTE network and an operation of a system on the basis of the same.

EP-A1-2942992 describes a customizable mobile broadband network system and a method for customizing a mobile broadband network.

US-A1-2015/055461 describes gateway selection for mobile communications network architecture optimization.

### Summary of Invention

According to a first aspect of the invention, there is provided a control network entity for an LTE network as defined in claim 1.

According to a further aspect of the invention, there is provided a network element system for use in an LTE network having a mobility management entity (MME), the network element system comprising: a first control entity; a second control entity; a first packet processing engine (PPE); and a second packet processing engine (PPE), wherein: the first control entity is configured to control the first PPE and the second control entity is configured to control the second PPE such that user plane traffic is routed through the first PPE and the second PPE; the first control entity is configured to route a dedicated bearer request to the second control entity rather than to a central gateway entity, the second control entity is configured to accept the dedicated bearer request routed to it by the first control entity such that a dedicated bearer terminating at the second control entity can be set up without first setting up a default bearer terminating at the second control entity, wherein the dedicated bearer is a child of the default bearer, the dedicated bearer having specific quality of service properties for carrying voice or video data; and the first control entity and the second control entity are located within a core network of the LTE network, whilst the first PPE and the second PPE are located outside the core network. The first control entity may be configured to send a set of control messages to the second control entity to set up a transport tunnel between the first PPE and the second PPE, the set of control messages including an address of the first PPE, and the second control entity may be configured to return an address of the second PPE, in order to route user plane traffic through the first PPE and the second PPE.

The first PPE and the second PPE may be integrated into a single network element as first and second logical PPE elements.

In this case, no external interface exists between the first logical PPE element and the second logical PPE element in the single network element.

The first PPE and the second PPE may be configured to communicate directly with each other using Internet Protocol (IP) or a layer 2 tunnel.

The single network element may have a first control interface for communicating with the first control entity and a second control interface for communicating with the second control entity.

The first PPE and the second PPE may be integrated in or collocated with an eNodeB as first and second logical PPE elements.

The eNodeB, first PPE and second PPE may be integrated into a single network element and configured to communicate directly with each other using Internet Protocol (IP) or a layer 2 tunnel.

In this case, no external interface exists between the eNodeB, first logical PPE element and second logical PPE element.

The first control entity and the second control entity may be integrated into a single control network element.

The single control network element may have a first control interface for communicating with the first PPE and a second control interface for communicating with the second PPE.

Alternatively, the single control network element may have a single control interface for communicating with a single network entity in which the first PPE and the second PPE are integrated.

The first control entity may be operable to cause the first PPE to mirror user traffic to a legal intercept entity within the core network.

Additionally or alternatively, the first PPE may be operable to mirror user traffic to a local traffic analysis entity.

The network element system may further comprise a third PPE, the third PPE being located within the core network, and the first control entity may be configured to set up bearers between the second PPE and the third PPE, and the first control entity may be configured to implement rules that determine which bearer is used for user plane traffic.

The network element system may further comprise a Content Delivery Network (CDN) server or a Domain Name System (DNS) server residing outside the core telecommunications network, and the first control entity may be configured to implement rules that route relevant user traffic to the CDN or DNS server via the first PPE and the second PPE rather than through the core telecommunications network.

The first control entity may be configured to gather packet count statistics for traffic that is routed to the CDN or the DNS server.

The network element system may further comprise an external network associated with the second PPE and with a gateway entity located within the core telecommunications network, and the first control entity or the first PPE may be configured to select whether user traffic is routed to the second PPE or to the gateway entity located within the core network according to a location of a device requesting a connection to the external network.

The first control entity may be configured to resolve a request for a connection to the external network that originates from a device local to the external network to refer to the second control entity, and the second control entity may be configured to select the second PPE, in order to route traffic to the external network without entering the core telecommunications network.

The first control entity may comprise a serving gateway (SGW) control entity; the second control entity may comprise a packet delivery network (PDN) gateway (PGW); the first PPE may comprise a serving gateway PPE; and the second PPE may comprise a PDN gateway PPE.

### Brief Description of the Drawings

Examples of the invention will now be described, strictly by way of example only, with reference to the accompanying drawings, of which:
Figure 1 is a schematic representation of a known telecommunications network architecture;
Figure 2 is a schematic representation of a telecommunications network architecture;
Figure 3 is a schematic representation of a telecommunications network architecture that is similar to that of Figure 2, and includes a single packet processing engine not falling within the scope of the claimed subject-matter;
Figure 4 is a schematic representation of a telecommunications network architecture that is similar to that of Figure 2, and includes a single control entity;
Figure 5 is a schematic representation of a further telecommunications network architecture not falling within the scope of the claimed subject-matter;
Figure 6 is a schematic representation of a further telecommunications network architecture;
Figure 7 is a schematic representation of a further telecommunications network architecture not falling within the scope of the claimed subject-matter; and
Figure 8 is a schematic representation of a further telecommunications network architecture not falling within the scope of the claimed subject-matter.

### Description of the Examples

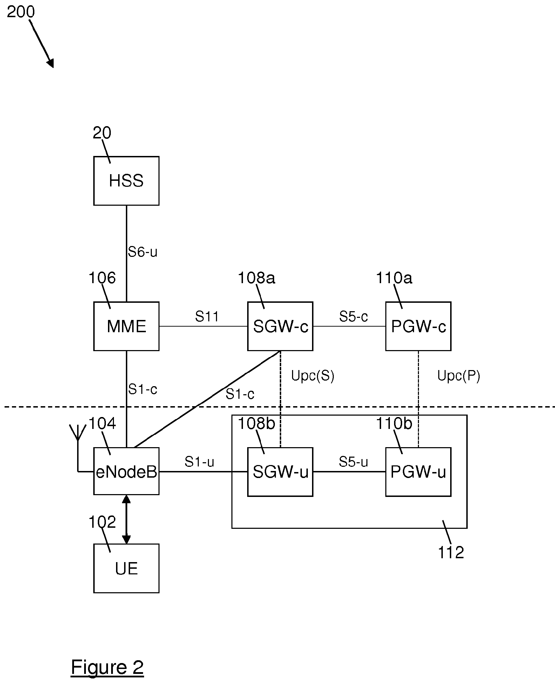

Examples of the invention will now be described by reference to Figures 2 to 8 of the drawings. For convenience and ease of understanding the description below uses terminology that is commonly used to describe LTE networks, but it will be appreciated that the various elements, systems and methods described are equally applicable to other network systems such as, for example, 5G, and those skilled in the art will recognise that the principles described below can equally be applied to equivalent network entities and elements of those other network systems.

Referring now to Figure 2, a network architecture is shown generally at 200. The architecture permits a UE 102 to connect to a core telecommunications network via an eNodeB 104. The dashed horizontal line in Figure 2 represents the boundary of the core telecommunications network; elements of the core telecommunications network that reside within the core telecommunications network are shown above the dashed horizontal line, whilst elements that are not part of the core telecommunications network and reside outside the core telecommunications network are shown below the dashed horizontal line.

The architecture illustrated in Figure 2 includes a network element system including a first control entity and a first packet processing entity, which in the case of an LTE network are SGW elements 108a, 108b, and a second control entity and a second packet processing entity, which in the case of an LTE network are PGW elements 110a, 110b. The SGW elements 108a, 108b have equivalent functionality to the SGW 18 in the architecture illustrated in Figure 1, but importantly that functionality is split between two separate entities: a SGW-c (control) entity 108a, which handles control plane functionality; and a SGW-u (user) packet processing entity (PPE) 108b, which handles user plane functionality. Similarly, the PGW elements 110a, 110b have equivalent functionality to the PGW 20 in the architecture illustrated in Figure 1, but again, importantly, that functionality is split between two separate entities: a PGW-c (control) entity 110a, which handles control plane functionality and a PGW-u (user) packet processing entity (PPE) 110b, which handles user plane functionality. The SGW-c entity 108a and the PGW-c entity 110a reside within the core network, whilst the SGW-u PPE 108b and the PGW-u PPE 110b reside outside the core network, typically either at the radio access edge close to the eNodeB 104 or within an enterprise datacentre. However, traffic flow in the SGW-u PPE 108b and the PGW-u PPE 110b are controlled by the SGW-c entity 108a and the PGW-c entity 110a respectively.

In the architecture illustrated in Figure 2, when the MME 106 initiates the setup of bearers for the UE 102 it contacts the SGW-c entity 108a using the 3GPP standards-based GTP-C protocol over the S11 interface, and then the SGW-c entity 108a operates GTP-C control messages between the SGW-c entity 108a and the PGW-c entity 110a. The PGW-c entity 110a configures the PGW-u PPE 110b to set up a tunnel between the SGW and a PGW to support the UE 102 session over a new interface between the PGW-c entity 110a and the PGW-u PPE 110b, called the user plane control interface (or Upc(P)) between the PGW components . The control messages from the SGW-c entity 108a to the PGW-c entity 110a contain the address of the SGW-u PPE 108b, and the PGW-c PPE 110a returns the address of the PGW-u packet processing entity 1110b. An S1-U tunnel is then set up directly between the eNodeB 104 and the SGW-u PPE 108b. In this way, user data traffic can be routed through the PGW-u PPE 110b and the SGW-u PPE 108b.

In addition to the new Upc(P) interface between the PGW components (i.e. between the PGW-c entity 110a and the PGW-u PPE 110b), a second new interface is defined, called the user plane control interface (or Upc(S)) between the SGW components (i.e. between the SGW-c entity 108a and the SGW-u PPE 108b).

It is to be noted that the Upc interfaces both normally operate bearer control from the SGW-u and PGW-u entities 108b, 110b, but also selective mirroring of UP streams for legal intercept and administrative tagging and logging for input to functions such as accounting that are based in the core network.

This division of the SGW elements 108a, 108b and the PGW elements 110a, 110b into separate control and user data entities permits breakout of user data traffic from the core network, which can improve latency, leading to an improved user experience. Offloading traffic from the core network in this way also brings economic benefits for the network operator, due to the attendant increase in network capacity. For example, where the eNodeB 104, SGW-u PPE 108b and PGW-u PPE 110b are located with an enterprise and the UE 102 is requesting a connection to a PDN which is also located within that enterprise, the user data can be routed between the UE 102 and the requested PDN via the eNodeB, SGW-u PPE 108b and PGW-u PPE 110b without ever leaving the enterprise.

Because traffic flow in the SGW-u PPE 108b and the PGW-u PPE 110b is controlled by the SGW-c entity 108a and the PGW-c entity 110a respectively, which reside in the core network, functions such as legal intercept (LI), traffic data analytics and multi-user communications can still be implemented, since the control plane entities (the SGW-c entity 108a and the PGW-c entity 110a) remain under the control of the core network, meaning that the core network can still cause the SGW-u PPE 108b to mirror user traffic to other entities for LI, analytics, multi-user communications and the like. For LI, user traffic is mirrored to one or more LI entities residing within the core network, whereas for analytics user traffic is mirrored to a local traffic analysis entity.

In a conventional network architecture of the kind illustrated in Figure 1, a S5/S8 interface tunnel is required between the SGW 18 and the PGW 22, 22', 22", to permit control messages and user data to be transmitted between the SGW 18 and the PGW 22, 22', 22".

In the architecture illustrated in Figure 2, the SGW-u PPE 108b and the PGW-u PPE 110b are able to communicate directly with each other using Internet Protocol (IP), and recognise this fact. Accordingly, instead of setting up a S5/S8 GTP tunnel between themselves, the SGW-u PPE 108b and the PGW-u PPE 110b collapse the S5/S8 interface and communicate directly via IP routing or a layer 2 tunnel. In this way, the S1-U tunnel between the eNodeB 104 and the SGW-u PPE 108b can be extended to the PGW-u PPE 110b by IP routing at the SGW-u PPE 108b.

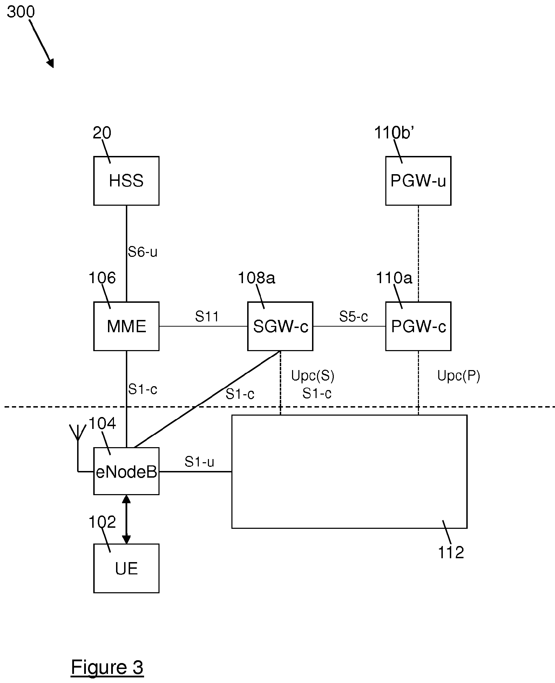

As shown in Figure 2 and discussed above, the SGW-u entity 108b and the PGW-u entity 110b reside outside the core network. The SGW-u PPE 108b and the PGW-u PPE 110b may be integrated as logical elements in a single packet processing engine network entity 112, which may be a standalone entity, or may be integrated or collocated with the eNodeB 104, as shown schematically in Figure 3. Where the SGW-u PPE 108b and the PGW-u PPE 110b are integrated as a single packet processing engine network entity 112 with control interfaces to both the SGW-c entity 108a and the PGW-c entity 110a, as shown in Figure 2, then the S5 link between the SGW-u PPE 108b and the PGW-u PPE 110b can be removed entirely, such that no external interface exists between the logical SGW-u PPE 108b element and the logical PGW-u PPE 110b element.

Where the SGW-u PPE 108b and the PGW-u PPE 110b are integrated or collocated with the eNodeB 104, further benefits can be realised. In this case, it is possible to collapse or remove the S5/S8 GTP tunnel between the SGW-u PPE 108b and the PGW-u PPE 110b, but also, because of the integration or collocation of the SGW-u PPE 108b with the eNodeB 104, there is minimal transmission overhead between the eNodeB 104 and the SGW-u PPE 108b. Because of this the transmission tunnel between the eNodeB 104 and the SGW-u PPE 108b can be collapsed, and the eNodeB 104 and SGW-u PPE 108b can be functionally combined allowing for the removal of the S1-U interface. In this case the user data is passed directly to the SGi interface. Thus, less processing is required as a result of the integration of the SGW-u PPE 108b and the PGW-u PPE 110b with the eNodeB 104, and so throughput can be improved for the available processing power. Alternatively, if the eNodeB 104, the SGW-u PPE 108b and the PGW-u PPE 110b are truly integrated there need be no external interface between the respective entities (i.e. no interface exists between the eNodeB 104, the SGW-u PPE 108b and the PGW-u PPE 110b).

This approach lends itself to recent technology innovations such as software defined networking (SDN) where the control of IP flows and the routing of IP flows are separated into control plane and user plane parts so that each function may be implemented on the most suitable hardware platform for efficiency and scalability reasons.

In the architecture illustrated in Figure 2, the SGW-c entity 108a is associated with a single SGW-u PPE 108b, and the PGW-c entity 110a is associated with a single PGW-u PPE 110b. However, the SGW-c entity 108a could be associated with multiple different SGW-u PPEs, which could reside either within or outside of the core network. Similarly, the PGW-c entity 110a could be associated with multiple different PGW-u PPEs, which could reside either within or outside the core network. The SGW-c entity 108a may be configured to information regarding the location of the UE 102, for example a cell ID or a tracking area identifying the eNodeB 104 being used by the UE 102, and, based on this location information, to select an appropriate PGW-u PPE 110b for the requested session. Additionally or alternatively, the PGW-c 110a may be provided with information regarding the location of the UE 102, for example a cell ID or a tracking area identifying the eNodeB 104 being used by the UE 102, for the purpose of location based charging for example. Based on the received location information, the PGW-c entity 110a may select an appropriate PGW-u PPE 110b for the requested session. Alternatively, the PGW-c entity 110a may select an appropriate PGW-u PPE 110b for the requested session based on the IP address of the SGW-u PPE 108b.

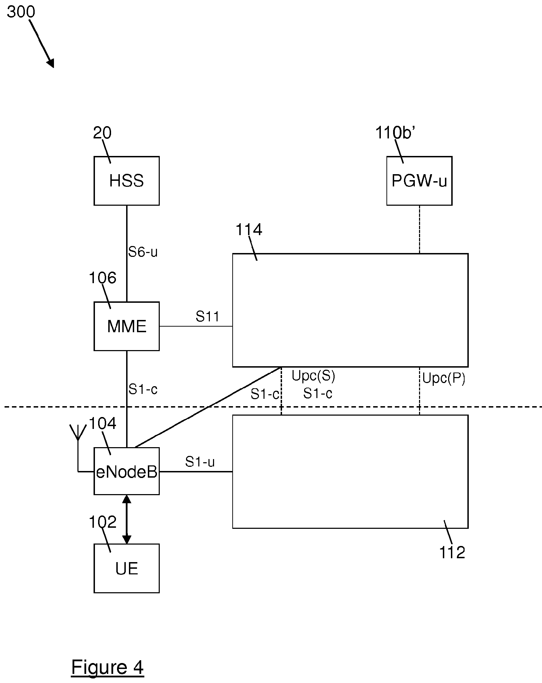

Figure 4 is a schematic representation of a further network architecture that is similar to that illustrated in Figure 3, with the exception that the SGW-c entity 108a and the PGW-c entity 110a are integrated into a single control network entity 114 which resides within the core network. Where the SGW-c entity 108a and the PGW-c entity 110a are integrated as a single control network entity 114 as shown in Figure 4, then the S5 link between the SGW-c entity 108a and the PGW-c entity 110c can be removed entirely.

The control network entity 114 may support both the UPc(S) and UPc(P) as separate interfaces to the SGW-u PPE 108b and the PGW-u PPE 110b (whether those entities are provided as separate entities or as a single integrated packet processing engine network entity 112), as shown in Figure 4. Alternatively, the single control network entity 114 may combine the UPc(S) and UPc(P) as a new interface xUPc between the single control network entity 114 and either the integrated packet processing engine network entity 112 or the individual SGW-u PPE 108b and the individual PGW-u PPE 110b as appropriate.

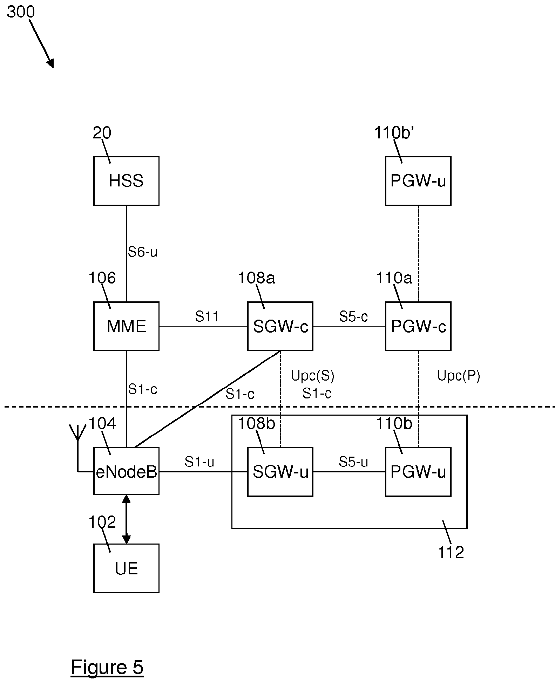

Figure 5 is a schematic representation of a further network architecture implementation in which multiple PGW-u PPEs are associated with a single PGW-c entity, not falling within the scope of the claimed subject-matter. The implementation of Figure 5 uses elements similar to those of Figures 2 to 4, and so like elements in Figure 5 are denoted by like reference signs.

In the implementation 300 illustrated in Figure 5, the PGW-c 110a is associated with a first PGW-u PPE 110b which resides outside of the core network (e.g. within an enterprise) and a second PGW-u PPE 110b' which resides within the core network. The PGW made up of PGW-c 110a and PGW-u PPEs 110b and 110b' is associated with a single APN, e.g. the internet.

During the initial setup of the connection between the eNodeB 104 and the PGW associated with the APN, a default bearer may be created, by the SGW-c entity 108a, between the eNodeB 104 and the PGW-u PPE 110b' that resides within the core network, whilst a dedicated bearer may be created, by the SGW-c entity 108a, between the eNodeB 104 and the PGW-u PPE 110b that resides outside the core network, without first setting up a default bearer between the eNodeB 104 and the PGW-u PPE 110b that resides outside the core network. Alternatively, the default bearer could be set up between the eNodeB 104 and the PGW-u PPE 110b that resides outside the core network and the dedicated bearer could be created between the eNodeB 104 and the PGW-u PPE 110b' that resides within the core network, without first setting up a default bearer between the eNodeB 104 and the PGW-u PPE 110b' that resides within the core network, or alternatively dedicated bearers could be created between the eNodeB 104 and each of the PGW-u PPEs 110b and 110b', as will be discussed in more detail below.

Traffic Flow Template (TFT) rules can be implemented by the SGW-c entity 108a or by the SGW-u PPE 108b in order to define which bearer is used and thus which of the PGW-u PPEs 110b, 110b' is used for user traffic. For example, the TFT rules could mandate that particular categories user traffic can be routed via the PGW-u PPE 110b using the dedicated bearer, such that they never leave the enterprise, whilst different categories of user traffic may be routed via the PGW-u 110b' that resides within the core network using the default bearer. TFT rules are typically implemented in known network architectures (such as that illustrated in Figure 1) by the UE 12 or the PGW 22, but have not hitherto been implemented by SGW entities. The implementation of TFT rules by the SGW-c entity 108a or by the SGW-u PPE 108b as described herein is a new concept, and permits selective breakout of user traffic to improve efficiency and capacity within the core network.

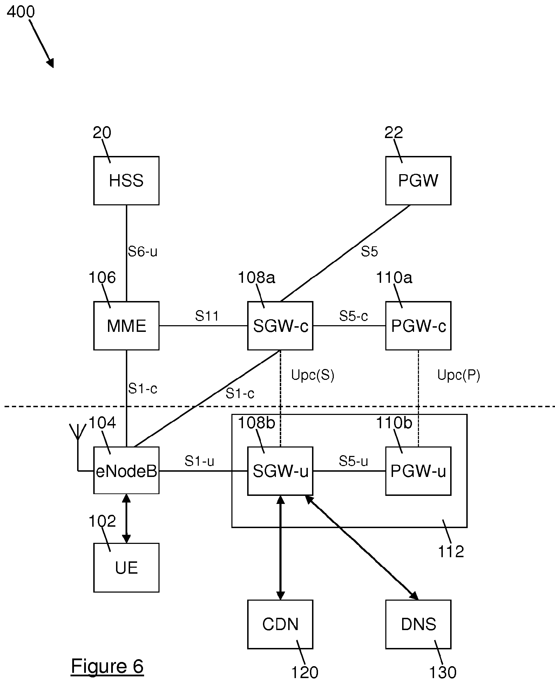

The use of the network element system including SGW control and PPE entities 108a, 108b and PGW control and PPE entities 110a, 110b permit user traffic to be broken out to a Content Delivery Network (CDN) server or to a Domain Name System (DNS) server, as will now be explained with reference to Figure 6. The implementation of Figure 6 uses elements similar to those of Figures 2 to 5, and so like elements in Figure 6 are denoted by like reference signs.

In the implementation illustrated generally at 400 in Figure 6 a CDN 120 (which may be, implemented for example, as a standard routed CDN, or using content centric networking (CCN) or information centric networking (ICN) techniques) is present outside the core network, e.g. within an enterprise which also houses a SGW-u PPE 108b and a PGW-u PPE 110a. The CDN 120 provides access to content, e.g. digital media such as films or music. The content may also be available from an internet accessible content server, but for reasons of reduced latency, improved quality of service or reduced cost, for example, it may be advantageous to serve content requested by a user from the local CDN 120 rather than through the core network.

Initially a default bearer is established by the SGW-c 108a between the eNodeB 104 and a PGW 22. One or more dedicated bearers between the eNode B and the PGW may also be set up at this time or later as is usual.

Once the bearers have been set up, the SGW-c 108a is aware of the uplink and downlink tunnel information for every user. The SGW-c 108a can then implement TFT rules in order to divert relevant user traffic, such as a request for a particular piece of content such as a film, from the SGW-u PPE 108b, to the CDN server 120. The CDN server 120 responds by streaming the requested content to the SGW-u PPE 108b, and this downlink traffic forwarded on to the eNodeB 104 for onward transmission to the requesting UE 102. Importantly, for purposes such as billing, an initial request for content may be forwarded to the relevant PGW 22. Alternatively, the SGW-c entity 108a may be configured to gather packet count statistics for the traffic that is passed to the CDN 120, and thus billing is also possible directly from the SGW-c entity 108a. In any event, the requested content is delivered by the CDN 120 which is (more) local to the requesting UE 102, which permits reduced latency and increased quality of service in delivering the content, while avoiding sending any traffic via the core network.

A similar approach is taken to DNS requests. For example, the UE 102 may request a connection to a CDN, using a particular DNS name, in order to access content. This request is routed via the SGW-u PPE 108b to a DNS server 130, which resolves the requested domain name to the IP address of a local CDN 120, such that the requested content is streamed to the UE 102 from the local CDN 120, via the SGW-u PPE 108b. This improves the quality of service experienced by the user, and frees up core network capacity, since the requested content remains outside the core network. Importantly, this advantage is achieved without requiring any modification of the behaviour of the UE 104; the UE 104 simply requests a connection to a particular DNS, using the DNS name, and the request is broken out by the SGW-u PPE 108b to the DNS server 130, which resolves the request to the IP address of the local CDN 120. Importantly, legal intercept is still supported in this approach.

Similarly, the UE 104 may request access to an enterprise email server, using the address of the email server. When the UE 104 is operating in a macro network outside of the enterprise this request resolves to a public IP address that is outside of the security "walls" of the enterprise. However, when the UE 104 is operating within the enterprise, the request is broken out to the DNS server 130 by the SGW-u PPE 108b, and the DNS server 130 resolves the request to a private internal interface for the enterprise email server, and different security rules can be enabled, for example to permit access to the email server without additional security requirements, or to permit access to content that is not accessible when the UE 104 is operating outside the enterprise.

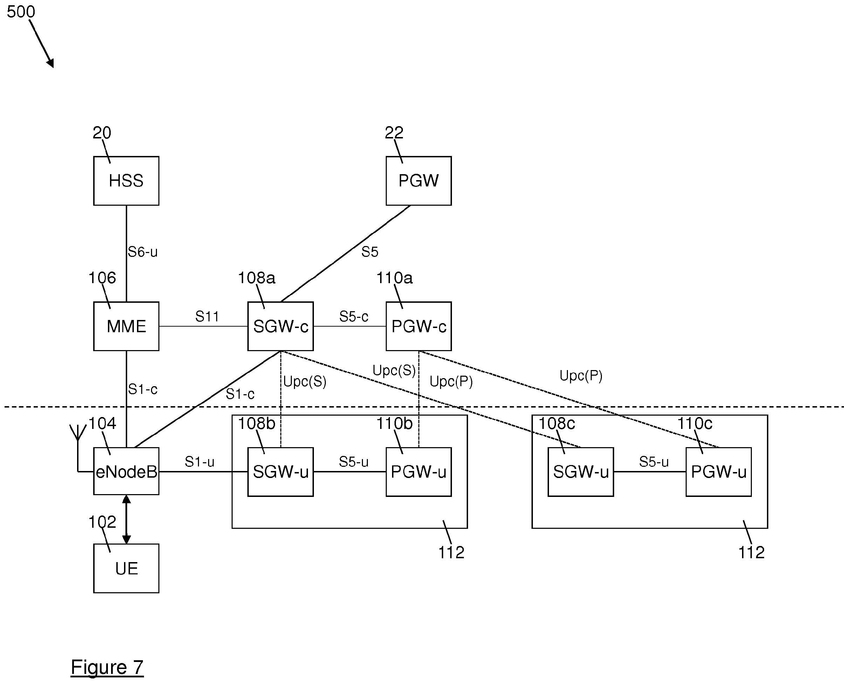

Turning now to Figure 7, a further telecommunications network architecture is shown generally at 500, not falling within the scope of the claimed subject-matter. Again, the architecture illustrated in Figure 7 includes elements similar to those present in Figures 2 to 6, so like reference signs are used to refer to like elements.

The architecture of Figure 7 includes a conventional PGW 22 in addition to a PGW-c entity 110a residing within the core network and a first PGW-u PPE 110b associated with the PGW-c entity 110a residing outside the core network, for example within a first enterprise. A SGW-c entity 108a also resides within the core network, whilst a first SGW-u PPE 108b associated with the SGW-c entity 108a is located outside the core network, e.g. within the first enterprise. A second SGW-u PPE 108c associated with the SGW-c entity 108a and a second PGW-u PPE 110c associated with the PGW-c entity 110a also reside outside the core network, for example within a second enterprise.

In this arrangement the SGW-c 108a is able to select whether user traffic will be routed via the PGW 22 or via either the PGW-u PPE 110b or the PGW-u PPE 110c, depending upon the location of a UE 102 and the SGW-u PPE 108b, 108c to which the eNode B 104 connects. This selection of the PGW-u PPE by the SGW-c 108a according to the location of the UE 102 means that there need only be one logical central PGW-c entity 110a, as shown. At the PGW-c entity 110a, the selection of the PGW-u PPE 110b or the PGW-u PPE 110c may be based on the IP address of the SGW-u PPE 108b, 108c to which the eNodeB 104 connects, to ensure that when routing traffic to the PDN associated with the selected PGW-u PPE the SGW-u associated with the selected PGW-u is used.

For example, if the UE 102 is located in the first enterprise and requests a connection to a LAN belonging to that enterprise (which LAN is associated with the PGW-u PPE 110b) using a connection request that specifies only "local LAN" rather than identifying the LAN specifically, the eNodeB 104 connects to the SGW-u PPE 108b belonging to the first enterprise. The SGW-c entity 108a therefore resolves the connection request to refer to the PGW-c entity 110a, and the PGW-c entity 110a selects the the PGW-u PPE 110b belonging to the first enterprise, to ensure that traffic routes to the local LAN. Thus, the SGW-c entity 108a can establish a direct connection between the SGW-u PPE 108b and the PGW-u PPE 110b, thereby permitting user traffic to bypass the core telecommunications network.

In contrast, if the UE 102 is located in the first enterprise and requests a connection to a LAN belonging to the second enterprise (which LAN is associated with the second PGW-u PPE 110c) using a connection request that explicitly specifies that LAN, the eNodeB 104 again connects to the SGW-u PPE 108b, but in this instance the SGW-c entity 108a resolves the request as a request to connect to the PGW-u PPE 110c belonging to the second enterprise. Thus, the SGW-c 108a can establish a connection between the eNodeB 104 and the PGW-u PPE 110c, routing traffic through the SGW-u PPE 108b. In this way traffic can be routed between, for example, branch office networks without routing through the core network.

As a further example, if the UE 102 is located in the first enterprise and requests a connection to a resource belonging to neither the first nor the second enterprise (e.g. the internet), the request is received at the SGW-c entity 108a, which establishes a connection between the eNodeB 104 and the conventional PGW 22.

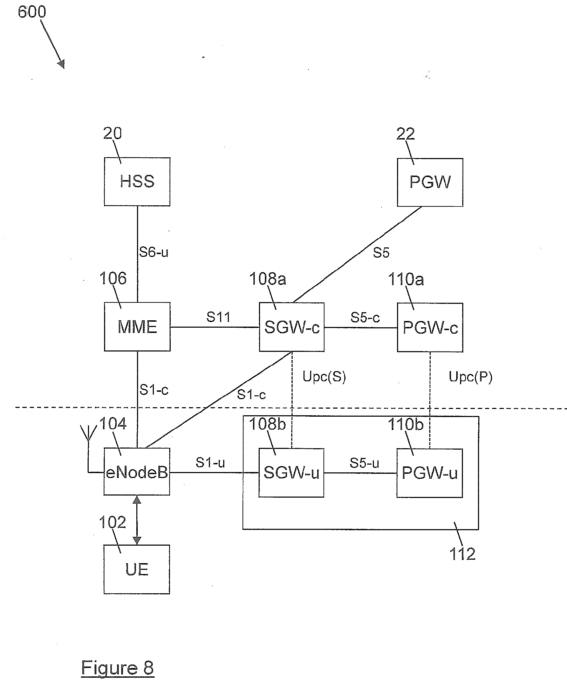

Figure 8 shows a further telecommunications network architecture, not falling within the scope of the claimed subject-matter. Again, the architecture shown generally at 600 in Figure 8 includes elements similar to those present in Figures 2 to 7, so like reference signs are used to refer to like elements.

In this architecture the SGW-c entity 108a is able to route a request to set up a dedicated bearer to a local PGW-c entity 1 10a, rather than to a central PGW 22. It will be recalled that a dedicated bearer is conventionally a child of a default bearer, and that default bearers conventionally terminate at the central PGW 22. Thus, in order to accommodate this request, the PGW-c entity 110a is configured to be able to accept such a request and to permit a dedicated bearer to be set up with the PGW-c entity 110a as its endpoint. By establishing a dedicated bearer which terminates at the PGW-c entity 110a in this way, particular user traffic can be directed to the PGW-u PPE 110c by the SGW-c entity 108a, thus permitting such traffic to be handled outside the core network.

As will be appreciated by those skilled in the art, the network entities, techniques and architectures described in this document permit user traffic to be broken out of a core telecommunications network, thereby permitting improved latency and quality of service for that user traffic whilst still permitting traffic mirroring (via the new Upc(S) and Upc(C) interfaces) for purposes such as lawful intercept, traffic data analytics and multi-user communications. The breakout of traffic from the core network also increases capacity within the core network, thereby increasing the number of users that can be served by the core network and improving value for the operator of the core network. Further, the network entities, techniques and architectures described in this document permit vastly improved coarse and fine routing control for mobile networks.

Although the description above uses terminology that is commonly used in relation to LTE networks, it is to be understood that, while the invention is applicable to LTE networks, the principles of the present invention are equally applicable to other communications networks standards and technologies, for example GPRS/EDGE, UMTS and CDMA based systems, as well as future networks such as 5G network. Thus it is to be understood that the invention is not limited to LTE networks. Moreover, although the above description refers to GTP-C to exemplify control protocol operation, it will be understood that the invention is not limited to GTP-C, and that other tunnelling or IP flow control protocols such as Proxy Mobile IPv6 (PMIP) or the OpenFlow protocol used in software defined networking may equally be used in the techniques described above. Moreover, although the invention is explained above in the context of current mobile systems such as LTE using the GPRS tunnelling protocol (GTP), the invention is equally applicable to user and control plane separation using alternative tunnelling protocols and may be operated using network or link layer technologies other than Internet Protocol in the future. It is envisaged that in the case of future network or link layer technologies the disclosed systems, methods and techniques would operate as described above, with the network/tunnel level IP addressing being replaced with the new network or link layer protocol addressing.

## Claims

1. A control network entity for an LTE network (600), the control network entity comprising a first control entity (108a) and a second control entity (110a), wherein the first control entity (108a) is configured to control a first packet processing engine, PPE, (108b) and the second control entity (110a) is configured to control a second packet processing engine, PPE, (110b), the said first PPE (108b) and the said second PPE (110b) being located outside a core network of the LTE network (600), such that user plane traffic is routed through the said first PPE (108b) and the said second PPE (110b);
the first control entity (108a) is configured to route a dedicated bearer request to the second control entity (110a) rather than to a central gateway entity (22);
the second control entity (110a) is configured to accept the dedicated bearer request routed to it by the first control entity (108a) such that a dedicated bearer terminating at the second control entity (110a) can be set up without first setting up a default bearer terminating at the second control entity (110a),
wherein the dedicated bearer is a child of the default bearer, the dedicated bearer having specific quality of service properties for carrying voice or video data; and
the first control entity (108a) and the second control entity (110a) are located within the core network of the LTE network (600).

2. A network element system for use in an LTE network (600) having a mobility management entity, MME (106), the network element system comprising:
the first control entity (108a) according to claim 1;
the second control entity (110a) according to claim 1;
the first packet processing engine, PPE, (108b) according to claim 1; and
the second packet processing engine, PPE (110b) according to claim 1.

3. A network element system according to claim 2, wherein the first control entity (108a) is configured to send a set of control messages to the second control entity (110a) to set up a transport tunnel between the first PPE (108b) and the second PPE (110b), the set of control messages including an address of the first PPE (108b), and the second control entity (1 10a) is configured to return an address of the second PPE (1 10b), in order to route user plane traffic through the first PPE (108b) and the second PPE (1 10b).

4. A network element system according to claim 2, wherein the first PPE (108b) and the second PPE (110b) are integrated into a single network element (112) as first and second logical PPE elements.

5. A network element system according to claim 4, wherein no external interface exists between the first logical PPE element and the second logical PPE element in the single network element (112).

6. A network element system according to claim 2, wherein the first PPE (108b) and the second PPE (110b) are integrated into a single network element (112) and are configured to communicate directly with each other using Internet Protocol, IP, or a layer 2 tunnel.

7. A network element system according to claim 4, wherein the single network element (112) has a first control interface for communicating with the first control entity (108a) and a second control interface for communicating with the second control entity (110a).

8. A network element system according to claim 2, wherein the first PPE (108b) and the second PPE (110b) are integrated in or collocated with an eNodeB (104) as first and second logical PPE elements.

9. A network element system according to claim 8, wherein the eNodeB (104), first PPE (108b) and second PPE (110b) are configured to communicate directly with each other using Internet Protocol, IP, or a layer 2 tunnel.

10. A network element system according to claim 8, wherein no external interface exists between the eNodeB (104), first logical PPE element and second logical PPE element.

11. A network element system according to claim 2, wherein the first control entity (108a) and the second entity (110a) are integrated into a single control network element (114).

12. A network element system according to claim 11, wherein the single control network element (114) has a first control interface for communicating with the first PPE (108b) and a second control interface for communicating with the second control PPE (110b).

13. A network element system according to claim 11, wherein the single control network element (114) has a single control interface for communicating with a single network entity (112) in which the first PPE (108b) and the second PPE (110b) are integrated.

14. A network element system according to claim 2, wherein the first control entity (108a) is operable to cause the first PPE (108b) to mirror user traffic to a legal intercept entity within the core network.

15. A network element system according to claim 2, wherein the first PPE (108b) is operable to mirror user traffic to a local traffic analysis entity.

16. A network element system according to claim 2, further comprising a third PPE, the third PPE being located within the core network, wherein the first control entity (108a) is configured to set up bearers between the second PPE and the third PPE, wherein the first control entity (108a) is configured to implement rules that determine which bearer is used for user plane traffic.

17. A network element system according to claim 2, further comprising a Content Delivery Network, CDN, server (120) or a Domain Name System, DNS, server (130) residing outside the core telecommunications network, wherein the first control entity (108a) is configured to implement rules that route relevant user traffic to the CDN (120) or DNS (130) server via the first PPE (108b) and the second PPE (110b) rather than through the core telecommunications network.

18. A network element system according to claim 17, wherein the first control entity (108a) is configured to gather packet count statistics for traffic that is routed to the CDN (120) or the DNS (130) server.

19. A network element system according to claim 2, further comprising an external network associated with the second PPE (110b) and with a gateway entity (22) located within the core telecommunications network, wherein the first control entity (108a) or the first PPE (108b) is configured to select whether user traffic is routed to the second PPE (1 10b) or to the gateway entity (22) located within the core network according to a location of a device requesting a connection to the external network.

20. A network element system according to claim 19, wherein the first control entity (108a) is configured to resolve a request for a connection to the external network that originates from a device local to the external network to refer to the second control entity (110a), and the second control entity (110a) is configured to select the second PPE (110b), in order to route traffic to the external network without entering the core telecommunications network.

21. A network element system according to claim 2, wherein:
the first control entity (108a) comprises a serving gateway, SGW, control entity;
the second control entity (110a) comprises a packet delivery network, PDN, gateway, PGW;
the first PPE (108b) comprises a serving gateway PPE; and
the second PPE (110b) comprises a PDN gateway PPE.

## Patentansprüche

1. Netzsteuereinheit für ein LTE-Netz (600), wobei die Netzsteuereinheit eine erste Steuereinheit (108a) und eine zweite Steuereinheit (110a) umfasst, wobei
- die erste Steuereinheit (108a) zum Steuern eines ersten Paketprozessors, PPE, (108b) konfiguriert ist und die zweite Steuereinheit (110a) zum Steuern eines zweiten Paketprozessors, PPE, (110b) konfiguriert ist, wobei der erste PPE (108b) und der zweite PPE (110b) sich außerhalb des Kernnetzes des LTE-Netzes (600) befinden, so dass der Verkehr der Benutzerebene durch die erste PPE (108b) und die zweite PPE (110b) geleitet wird,
- die erste Steuereinheit (108a) so konfiguriert ist, dass sie eine dedizierte Trägeranforderung an die zweite Steuereinheit (110a) und nicht an eine zentrale Gateway-Einheit (22) weiterleitet,
- die zweite Steuereinheit (110a) so konfiguriert ist, dass sie die von der ersten Steuereinheit (108a) an sie weitergeleitete dedizierte Trägeranforderung akzeptiert, so dass ein dedizierter Träger, der an der zweiten Kontrolleinheit (110a) endet, eingerichtet werden kann, ohne zuerst einen Standardträger einzurichten, der an der zweiten Kontrolleinheit (110a) endet,
- wobei der dedizierte Träger ein Nachfolger des Standardträgers ist, wobei der dedizierte Träger spezifische Dienstgüteeigenschaften zur Übertragung von Sprach- oder Videodaten aufweist, und
- die erste Steuereinheit (108a) und die zweite Steuereinheit (110a) sich innerhalb des Kernnetzes des LTE-Netzes (600) befinden.

2. Netzelementsystem zur Verwendung in einem LTE-Netz (600) mit einer Mobilitätsmanagementeinheit MME (106), wobei das Netzelementsystem Folgendes umfasst:
- die erste Steuereinheit (108a) nach Anspruch 1,
- die zweite Steuereinheit (110a) nach Anspruch 1,
- den ersten Paketprozessor PPE (108b) nach Anspruch 1 und
- den zweiten Paketprozessor PPE (110b) nach Anspruch 1.

3. Netzelementsystem nach Anspruch 2, wobei die erste Steuereinheit (108a) so konfiguriert ist, dass sie einen Satz von Steuermeldungen an die zweite Steuereinheit (110a) sendet, um einen Transporttunnel zwischen der ersten PPE (108b) und der zweiten PPE (110b) einzurichten, wobei der Satz von Steuermeldungen eine Adresse der ersten PPE (108b) enthält, und die zweite Steuereinheit (110a) so konfiguriert ist, dass sie eine Adresse der zweiten PPE (110b) zurücksendet, um den Verkehr der Benutzerebene durch den ersten PPE (108b) und den zweiten PPE (110b) zu leiten.

4. Netzelementsystem nach Anspruch 2, wobei der erste PPE (108b) und der zweite PPE (110b) als erstes und zweites logisches PPE-Element in ein einzelnes Netzelement (112) integriert sind.

5. Netzelementsystem nach Anspruch 4, wobei zwischen dem ersten logischen PPE-Element und dem zweiten logischen PPE-Element in dem einzelnen Netzelement (112) keine externe Schnittstelle besteht.

6. Netzelementsystem nach Anspruch 2, wobei der erste PPE (108b) und der zweite PPE (110b) in ein einziges Netzelement (112) integriert und so konfiguriert sind, dass sie unter Verwendung des Internetprotokolls IP oder eines Schicht-2-Tunnels direkt miteinander kommunizieren.

7. Netzelementsystem nach Anspruch 4, wobei das einzelne Netzelement (112) eine erste Steuerschnittstelle zur Kommunikation mit der ersten Steuereinheit (108a) und eine zweite Steuerschnittstelle zur Kommunikation mit der zweiten Steuereinheit (110a) aufweist.

8. Netzelementsystem nach Anspruch 2, wobei der erste PPE (108b) und der zweite PPE (110b) in einen eNodeB (104) als erstes und zweites logisches PPE-Element integriert oder mit diesem zusammen untergebracht sind.

9. Netzelementsystem nach Anspruch 8, wobei der eNodeB (104), der erste PPE (108b) und der zweite PPE (110b) so konfiguriert sind, dass sie unter Verwendung des Internetprotokolls IP oder eines Schicht-2-Tunnels direkt miteinander kommunizieren.

10. Netzelementsystem nach Anspruch 8, wobei keine externe Schnittstelle zwischen dem eNodeB (104), dem ersten logischen PPE-Element und dem zweiten logischen PPE-Element besteht.

11. Netzelementsystem nach Anspruch 2, wobei die erste Steuereinheit (108a) und die zweite Einheit (110a) in ein einziges Netzsteuerelement (114) integriert sind.

12. Netzelementsystem nach Anspruch 11, wobei das einzelne Netzsteuerelement (114) eine erste Steuerschnittstelle zur Kommunikation mit dem ersten PPE (108b) und eine zweite Steuerschnittstelle zur Kommunikation mit dem zweiten Steuer-PPE (110b) aufweist.

13. Netzelementsystem nach Anspruch 11, wobei das einzelne Steuernetzelement (114) eine einzelne Steuerschnittstelle zur Kommunikation mit einer einzelnen Netzeinheit (112) aufweist, in die der erste PPE (108b) und der zweite PPE (110b) integriert sind.

14. Netzelementsystem nach Anspruch 2, wobei die erste Steuereinheit (108a) so betreibbar ist, dass sie den ersten PPE (108b) veranlasst, den Benutzerverkehr an eine legale Abhöreinheit innerhalb des Kernnetzes zu spiegeln.

15. Netzelementsystem nach Anspruch 2, wobei der erste PPE (108b) so betreibbar ist, dass er den Benutzerverkehr an eine lokale Verkehrsanalyseeinheit spiegelt.

16. Netzelementsystem nach Anspruch 2, ferner einen dritten PPE umfassend, wobei sich der dritte PPE innerhalb des Kernnetzes befindet, wobei die erste Steuereinheit (108a) so konfiguriert ist, dass sie Träger zwischen dem zweiten PPE und dem dritten PPE einrichtet, wobei die erste Steuereinheit (108a) so konfiguriert ist, dass sie Regeln implementiert, die bestimmen, welcher Träger für den Verkehr auf der Benutzerebene verwendet wird.

17. Netzelementsystem nach Anspruch 2, das ferner einen Content-Delivery-Network-(CDN)-Server (120) oder einen Domain-Name-System-(DNS)-Server (130) umfasst, der sich außerhalb des Kerntelekommunikationsnetzes befindet, wobei die erste Steuereinheit (108a) so konfiguriert ist, dass sie Regeln implementiert, die relevanten Benutzerverkehr über den ersten PPE (108b) und den zweiten PPE (110b) statt über das Kerntelekommunikationsnetz an den CDN-(120)- oder DNS-(130)-Server leitet.

18. Netzelementsystem nach Anspruch 17, wobei die erste Steuereinheit (108a) so konfiguriert ist, dass sie die Paketzahlstatistik für den Verkehr sammelt, der zum CDN (120)- oder zum DNS (130)-Server geleitet wird.

19. Netzelementsystem nach Anspruch 2, ferner ein externes Netz umfassend, das mit dem zweiten PPE (110b) und mit einer Gateway-Einheit (22) verbunden ist, die sich innerhalb des Kerntelekommunikationsnetzes befindet, wobei die erste Steuereinheit (108a) oder der erste PPE (108b) so konfiguriert ist, dass entsprechend dem Standort eines Geräts, das eine Verbindung zum externen Netz anfordert, ausgewählt wird, ob der Benutzerverkehr zum zweiten PPE (110b) oder zur Gateway-Einheit (22), die sich innerhalb des Kernnetzes befindet, geleitet wird.

20. Netzelementsystem nach Anspruch 19, wobei die erste Steuereinheit (108a) so konfiguriert ist, dass sie eine Anforderung für eine Verbindung mit dem externen Netz, die von einem im externen Netz befindlichen Gerät ausgeht, erledigt, um auf die zweite Steuereinheit (110a) weiterzuleiten, und die zweite Steuereinheit (110a) so konfiguriert ist, dass sie den zweiten PPE (110b) auswählt, um den Verkehr ohne Eintritt in das Kerntelekommunikationsnetz zum externen Netz zu leiten.

21. Netzelementsystem nach Anspruch 2, wobei:
- die erste Steuereinheit (108a) eine Serving-Gateway (SGW)-Steuereinheit umfasst,
- die zweite Steuereinheit (110a) ein Packet Delivery Network (PDN)-Gateway, PGW, umfasst,
- der erste PPE (108b) eine Serving Gateway-PPE umfasst und
- der zweite PPE (110b) eine PDN-Gateway PPE umfasst.

## Revendications

1. Entité de réseau de contrôle pour un réseau LTE (600), cette entité de réseau de contrôle comprenant une première entité de contrôle (108a) et une seconde entité de contrôle (110a),
- la première entité de contrôle (108a) est configurée pour contrôler un premier moteur de traitement des paquets PPE (108b) et la seconde entité de contrôle (110a) est configurée pour contrôler un second moteur de traitement des paquets PPE (1 10b),
- le premier moteur PPE (108b) et le second moteur PPE (110b) étant situés à l'extérieur du réseau central du réseau LTE (600) de façon que le trafic du plan utilisateur passe par le premier moteur PPE (108b) et le second moteur PPE (1 10b),
- la première entité de contrôle (108a) est configurée pour diriger une requête de support par défaut vers la seconde entité de contrôle (110a) plutôt que vers l'entité de passerelle centrale (22),
- la seconde entité de contrôle (1 10a) est configurée pour accepter la requête de support dédié, envoyée par la première entité de contrôle (108a) de façon qu'un support dédié se terminant dans la seconde entité de contrôle (110a) puisse être placé sans d'abord placer un support par défaut se terminant dans la seconde entité de contrôle (110a),
* le support dédié est issu du support par défaut, le support dédié ayant des propriétés de qualité de service pour le transport de données vocales ou de données vidéo, et
* la première entité de contrôle (108a) et la seconde entité de contrôle (110a) sont situées dans le réseau central du réseau LTE (600).

2. Système d'élément de réseau utilisé dans un réseau LTE (600) ayant une entité de gestion de mobilité MME (106), le système d'élément de réseau comprenant :
- la première entité de contrôle (108a) selon la revendication 1,
- la seconde entité de contrôle (1 10a) selon la revendication 1,
- le premier moteur de traitement des paquets PPE (108b) selon la revendication 1, et
- le second moteur de traitement des paquets PPE (110b) selon la revendication 1.

3. Système d'élément de réseau selon la revendication 2,
dans lequel
la première entité de contrôle (108a) est configurée pour envoyer un jeu de messages de contrôle à la seconde entité de contrôle (110a) pour établir un tunnel de transport entre le premier moteur PPE (108b) et le second moteur PPE (1 10b), le jeu de messages de contrôle comprenant une adresse du premier moteur PPE (108b) et la seconde entité de contrôle (110a) est configurée pour retourner une adresse du second moteur PPE (110b) pour diriger le trafic du plan utilisateur à travers le premier moteur PPE (108b) et le second moteur PPE (110b).

4. Système d'élément de réseau selon la revendication 2,
dans lequel
le premier moteur PPE (108b) et le second moteur PPE (110b) sont intégrés dans un unique élément de réseau (112) comme premier et comme second élément PPE logique.

5. Système d'élément de réseau selon la revendication 4,
dans lequel
il n'existe pas d'interface externe entre le premier élément de moteur PPE logique et le second élément de moteur PPE logique dans l'unique élément de réseau (112).

6. Système d'élément de réseau selon la revendication 2,
dans lequel
le premier moteur PPE (108b) et le second moteur PPE (110b) sont intégrés dans un unique élément de réseau (112) et sont configurés pour communiquer directement l'un avec l'autre en utilisant le protocole IP (IP) ou un tunnel deux couches.

7. Système d'élément de réseau selon la revendication 4,
dans lequel
l'unique élément de réseau (112) a une première interface de contrôle pour communiquer avec la première entité de contrôle (108a) et une seconde interface de contrôle pour communiquer avec la seconde entité de contrôle (110a).

8. Système d'élément de réseau selon la revendication 2,
dans lequel
le premier moteur PPE (108b) et le second moteur PPE (110b) sont intégrés ou situés ensembles dans un noeud eNodeB (104) comme premier et comme second élément de moteur PPE logique.

9. Système d'élément de réseau selon la revendication 8,
dans lequel
le noeud eNodeB (104), le premier moteur PPE (108b) et le second moteur PPE (110b) sont configurés pour communiquer directement l'un avec l'autre en utilisant le protocole Internet IP ou un tunnel deux couches.

10. Système d'élément de réseau selon la revendication 8,
dans lequel
il n'existe pas d'interface externe entre le noeud eNodeB (104), le premier élément de moteur PPE logique et le second élément de moteur PPE logique.

11. Système d'élément de réseau selon la revendication 2,
dans lequel
la première entité de contrôle (108a) et la seconde entité de contrôle (110a) sont intégrées dans un unique élément de réseau de contrôle (114).

12. Système d'élément de réseau selon la revendication 11,
dans lequel
l'unique élément de réseau de contrôle (114) a une première interface de contrôle pour communiquer avec le premier moteur PPE (108b) et une seconde interface de contrôle pour communiquer avec le second moteur PPE de contrôle (110b).

13. Système d'élément de réseau selon la revendication 11,
dans lequel
l'unique élément de réseau de contrôle (114) a une seule interface de contrôle pour communiquer avec une unique entité de réseau (112) dans lequel sont intégrés le premier moteur PPE (108b) et le second moteur PPE (110b).

14. Système d'élément de réseau selon la revendication 2,
dans lequel
la première entité de contrôle (108a) fonctionne pour que le premier moteur PPE (108b) renvoie le trafic utilisateur sur une entité d'interception légale dans le réseau central.

15. Système d'élément de réseau selon la revendication 2,
dans lequel
le premier moteur PPE (108b) fonctionne pour renvoyer le trafic utilisateur vers une entité locale d'analyse de trafic.

16. Système d'élément de réseau selon la revendication 2,
comprenant en outre
un troisième moteur PPE, ce troisième moteur PPE étant dans le réseau central, la première entité de contrôle (108a) est configurée pour placer des supports entre le second moteur PPE et le troisième moteur PPE, la première entité de contrôle (108a) est configurée pour appliquer les règles qui définissent quel support utiliser pour le trafic du plan utilisateur.

17. Système d'élément de réseau selon la revendication 2,
comprenant en outre
un serveur CDN (réseau de diffusion de contenu) (120), un serveur DNS (système de noms de domaines) (130) résidant à l'extérieur du réseau central des télécommunications, la première entité de contrôle (108a) est configurée pour appliquer les règles qui dirigent le trafic utilisateur concerné ver le serveur CDN (120) ou le serveur DNS (130) par le premier moteur PPE (108b) et le second moteur PPE (110b) plutôt qu'à travers le réseau central des télécommunications.

18. Système d'élément de réseau selon la revendication 17,
dans lequel
la première entité de contrôle (108a) est configurée pour recueillir les statistiques de comptage des paquets du trafic dirigé vers le serveur CDN (120) ou le serveur DNS (130).

19. Système d'élément de réseau selon la revendication 2,
comprenant en outre
un réseau externe associé au second moteur PPE (110b) et à une entité de passerelle (22) dans le réseau central des télécommunications, la première entité de contrôle (108a) ou le premier moteur PPE (108b) est configuré pour sélectionner si le trafic d'utilisateur est dirigé vers le second moteur PPE (110b) ou l'entité de passerelle (22) dans le réseau central selon la situation d'un dispositif demandant une liaison vers le réseau externe.

20. Système d'élément de réseau selon la revendication 19,
dans lequel
la première entité de contrôle (108a) est configurée pour résoudre une requête de connexion au réseau externe qui vient d'un dispositif local vers le réseau externe pour se référer à la seconde entité de contrôle (1 10a) et la seconde entité de contrôle (110a) est configurée pour sélectionner le second moteur PPE (110b) pour diriger le trafic vers le réseau externe sans passer dans le réseau central des télécommunications.

21. Système d'élément de réseau selon la revendication 2,
dans lequel
- la première entité de contrôle (108a) comprend une entité de contrôle de passerelle de service SGW,
- la seconde entité de contrôle (110a) comprend une passerelle PGW de réseau de distribution des paquets PDN,
le premier moteur PPE (108b) comporte une passerelle de service PPE, et
le second moteur PPE (110b) comprend une passerelle PPE de réseau de distribution des paquets PDN.
